# EUROPÄISCHE PATENTSCHRIFT

(11) **EP 0 454 777 B1**
(45) Veröffentlichungstag und Bekanntmachung des Hinweises auf die Patenterteilung: **08.06.1994**
(21) Anmeldenummer: 90902774.0
(22) Anmeldetag: 13.01.1990
(51) Int. Cl.: H04N 11/00

(54) **KOMPATIBLES FREQUENZMULTIPLEX-FERNSEHSYSTEM**
COMPATIBLE FREQUENCY-DIVISION MULTIPLEX TELEVISION SYSTEM
SYSTEME DE TELEVISION COMPATIBLE A MULTIPLEXAGE EN FREQUENCES

(30) Priorität: 16.01.1989 DE 3901117; 16.12.1989 DE 3941576
(43) Veröffentlichungstag der Anmeldung: 06.11.1991
(73) Patentinhaber: Thomson Consumer Electronics Sales GmbH, 30453 Hannover (DE)
(72) Erfinder: Holoch, Gerhard, W-8000 München 21 (DE); Hauzeneder, Siegfried, W-8268 Garching-Hart (DE); Plantholt, Martin, W-3005 Hemmingen 1 (DE)
(86) Internationale Anmeldenummer: EP9000070
(87) Internationale Veröffentlichungsnummer: WO9008444

(56) Entgegenhaltungen:
- EP-A- 0 120 390
- GB-A- 2 126 822
- S.M.P.T.E. JOURNAL, BAND 97, NR. 7, JULI 1988, SOCIETY OF MOTION PICTURE AND TELEVISION ENGINEERS, INC., (WHITE PLAINS, NY., US), M.A. ISNARDI: "EXPLORING AND EXPLOITING SUBCHANNELS IN THE NTSC SPECTRUM", SEITEN 526-532, SEITE 527, RECHTE SPALTE, ZEILE 19- SEITE 258. RECHTE SPALTE, ZEILE 16; SEITE 530, MITTLERE SPALTE, ZEILEN 8-12; FIGUR 6
- S.M.P.T.E. JOURNAL, VOL. 93, NO. 10, OCTOBER 1984, SOCIETY OF MOTION PICTURE AND TELEVISION ENGINEERS, INC., (WHITE PLAINS, NY.,US), T. FUKINUKI ET AL.: "EXPERIMENTS ON PROPOSED EXTENDED-DEFINITION TV WITH FULL NTSC COMPATIBILITY", PAGES 923-929, SEE PAGES 923, MIDDLE COLUMN, LINE 26 - PAGE 925, LEFT-HAND COLUMN, LINE 14 (CITED IN THE APPLICATION)

## Beschreibung

Die Erfindung bezieht sich auf ein PAL-kompatibles Frequenzmultiplex-Fernsehsystem gemäß dem Oberbegriff des Patentanspruchs 1.

Ein derartiges Fernsehsystem ist aus SMPTE Journal, Oktober 1984, S. 923-929, sowie aus den Patentschriften US-A-47 45 460 und US-A-46 60 072 bekannt. Zur kompatiblen Verbesserung eines Frequenzmultiplex-Fernsehsystems, z.B. eines PAL-Systems, im Sinne einer Reduzierung des Übersprechens von Leuchtdichtespektren in Farbspektren und umgekehrt ist es bekannt (BBC Research Report BBC RD 1981/11, "An Extended PAL-System for High Quality Television"), das Leuchtdichte-Signalspektrum in einen tieffrequenten Anteil Y₁ und einen hochfrequenten Anteil Y₂ aufzuspalten und den hochfrequenten Anteil Y₂ oberhalb des Übertragungsspektrums (5 bzw. 5,5 MHz) eines terrestrischen Kanals zu übertragen. Wegen des vorgegebenen terrestrischen Kanalrasters von z.B. 7 oder 8 MHz ist eine solche Übertragung nur in Satellitenkanälen mit einer Bandbreite von z.B. 10 MHz möglich. Dieses Satellitensignal kann auch auf einem herkömmlichen PAL-Empfänger kompatibel wiedergegeben werden, wobei dieser jedoch nur den tieffrequenten Anteil Y₁ des Leuchtdichtespektrums auswertet. Da jedoch bei herkömmlichem terrestrischen PAL-Empfang infolge der üblichen Nicht-Anwendung von Kammfiltern ohnehin nur das Leuchtdichtespektrum bis etwa 3,5 MHz ausgewertet wird, ist der Qualitätsverlust beim kompatiblen Empfang vernachlässigbar.

Es ist ferner aus den obengenannten Schriften bekannt, zur Erzielung einer höheren Auflösung im Leuchtdichtesignal bei unveränderter Kanalbandbreite des herkömmlichen Fernsehsystems (4,2 MHz beim NTSC-System) Leuchtdichtesignal-Komponenten oberhalb der Videobandgrenze (z.B. 4,2 MHz bis 6 MHz) im sogenannten 'Fukinuki'-Loch zu übertragen. Hierunter versteht man bei Frequenzmultiplex-Systemen wie dem NTSC- und dem PAL-Fernsehsystem vakante oder nicht effektiv genutzte spektrale Räume, die für die Übertragung zusätzlicher Informationen ausgenutzt werden können.
Hierzu wird der hochfrequente Leuchtdichtesignalanteil (4,2 MHz bis 6 MHz) z.B. auf die halbe NTSC-Farbträgerfrequenz (ca. 1,8 MHz) aufmoduliert und das resultierende Modulationssignal zusammen mit dem tieffrequenten Leuchtdichtesignalanteil von 0 bis 4,2 MHz als Leuchtdichteinformation übertragen. Da durch die Modulation eine Frequenzumsetzung des außerhalb der Videobandgrenze liegenden hochfrequenten Leuchtdichtesignalanteils in die Grenzen des herkömmlichen Videobandes erfolgt, wird die Kanalbandbreite nicht überschritten. Die Einlagerung des Modulationssignals in das von Spektren des tieffrequenten Leuchtdichtesignalanteils und des Farbsignals besetzte herkömmliche Videoband ist wegen des Fukinuki-Loches praktisch störungsfrei möglich.
Empfangsseitig wird das Modulationssignal ausgefiltert, demoduliert und in der Ursprungslage von 4,2 bis 6 MHz dem tieffrequenten Leuchtdichtesignalanteil hinzugefügt. Durch diese Auflösungserhöhung wird jedoch das Übersprechen der Leuchtsignalanteile in das Farbsignal (Crosscolour) nicht vermieden, und zwar weder bei einem herkömmlichen Farbfernsehempfänger noch bei einem zum Empfang des hochfrequenten Leuchtdichtesignalanteils von 4,2 MHz bis 6 MHz ausgelegten (verbesserten) Farbfernsehempfänger.

Der Erfindung liegt die Aufgabe zugrunde, ein kompatibles Frequenzmultiplex-Fernsehsystem der eingangs erwähnten Art dahingehend weiterzubilden, daß das Übersprechen von Leuchtdichtesignalanteilen in das Farbsignal ohne Änderung der herkömmlichen Farbfernsehnorm vermieden wird.

Diese Aufgabe wird durch die Merkmale des Patentanspruchs 1 gelöst. Vorteilhafte Ausgestaltungen und Weiterbildungen des erfindungsgemäßen Fernsehsystems sind in den Unteransprüchen angegeben.

Die Erfindung wird anhand von Ausführungsbeispielen näher erläutert. Es zeigt:
- Fig. 1: Eine dreidimensionale Darstellung des PAL-Spektrums;
- Fig. 2: ein Blockschaltbild der Sendeseite eines Ausführungsbeispiels des erfindungsgemäßen Fernsehsystems;
- Fig. 3: Frequenzspektren von Leuchtdichte- bzw. Farbsignalen an verschiedenen Stellen des Blockschaltbildes nach Fig. 2;
- Fig. 4: ein Blockschaltbild der Empfangsseite eines Ausführungsbeispiels des erfindungsgemäßen Fernsehsystems;
- Fig. 5: die Charakteristik einer vertikal-temporalen Filterung des Farbsignals in dem Blockschaltbild nach Figur 4 mit Zusatzsignal-Spektralräumen für ein erstes Ausführungsbeispiel;
- Fig. 6: eine Charakteristik für die vertikal-temporale Filterung des Modulationssignals Y*₂ in dem Blockschaltbild nach Fig. 4;
- Fig. 7: die Charakteristik einer vertikal-temporalen Filterung des Farbsignals in dem Blockschaltbild nach Figur 4 mit Zusatzsignal-Spektralräumen für ein zweites Ausführungsbeispiel.

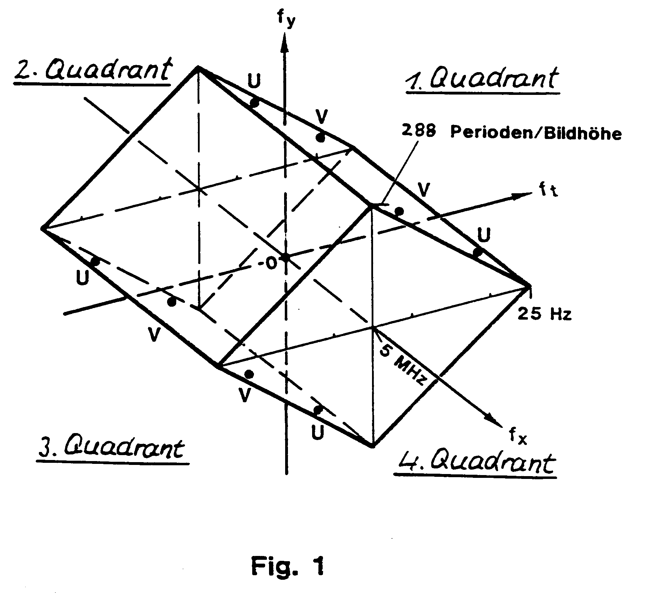

Bei der dreidimensionalen Darstellung des PAL-Spektrums nach Figur 1 ist den dort eingezeichneten Achsen fₓ, f_{y} und fₜ folgende Bedeutung zugeordnet:
- fₓ:: Auflösung in horizontaler Richtung mit Bandgrenze 5 MHz
- f_{y}:: Auflösung in vertikaler Richtung mit 288 Perioden pro Bildhöhe
- fₜ:: Auflösung in zeitlicher Richtung mit 25 Hz, bedingt durch 25 Vollbilder/s und den Zeilensprung.

Die in Figur 1 mit stark ausgezogener Linie eingezeichneten Grenzen definierten denjenigen spatial-temporalen Raum, in dem (bei statischem Bildinhalt) keine Alias-Komponenten (überlagerte Spektren) auftreten. Dabei ist wesentlich, daß die Farbdifferenzsignale U und V ausschließlich im ersten und dritten Quadraten eines Koordinatensystems liegen, welches von den Achsen f_{y} und fₜ für Werte der Farbträgerfreguenz von fₓ = ± 4,43 MHz gebildet wird. Der zweite und vierte Quadrant dieses Koordinatensystems sind - abgesehen von marginalen Übersprecheffekten - im wesentlichen frei von U- und V-Komponenten. Dieser freie Raum wurde von Fukinuki im SEMPTE Journal, Oktober 1984, Seiten 923-929, erstmals näher beschrieben. Erfindungsgemäß wird dieses sogenannte Fukinuki-Loch ausgenutzt, um dort den hochfrequenten Anteil des Leuchtdichte-Signalspektrums zu übertragen. Wie man aus Figur 1 erkennen kann, wird durch die Übertragung der hochfrequenten Leuchtdichte-Spektren im zweiten und vierten Quadranten des erwähnten Koordinatensystems vermieden, daß diese höherfrequenten Leuchtdichte-Spektren oberhalb 3,5 MHz in die Farbdifferenzspektren der U- und V-Komponenten im ersten und dritten Quadranten übersprechen.

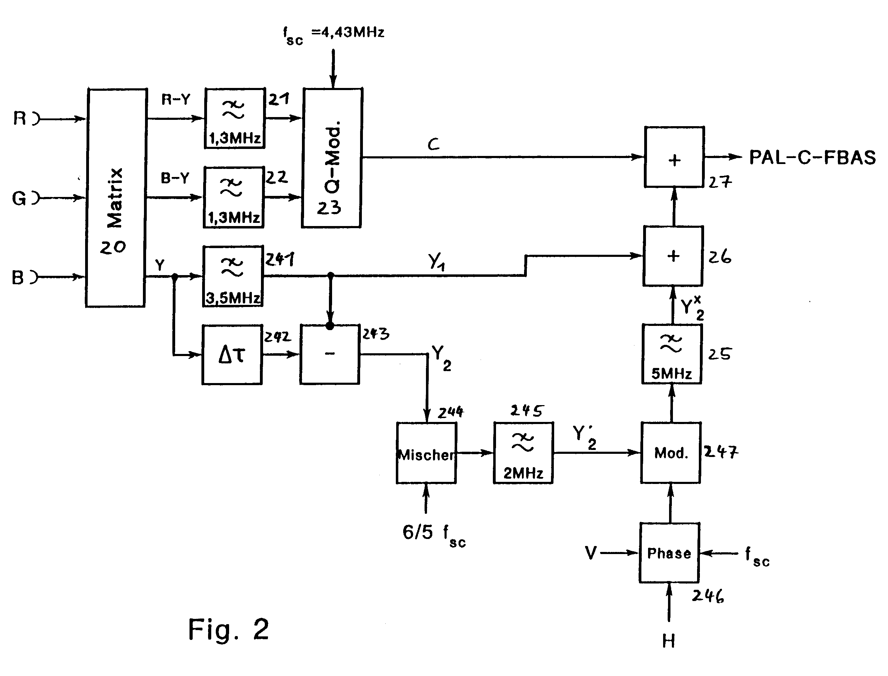

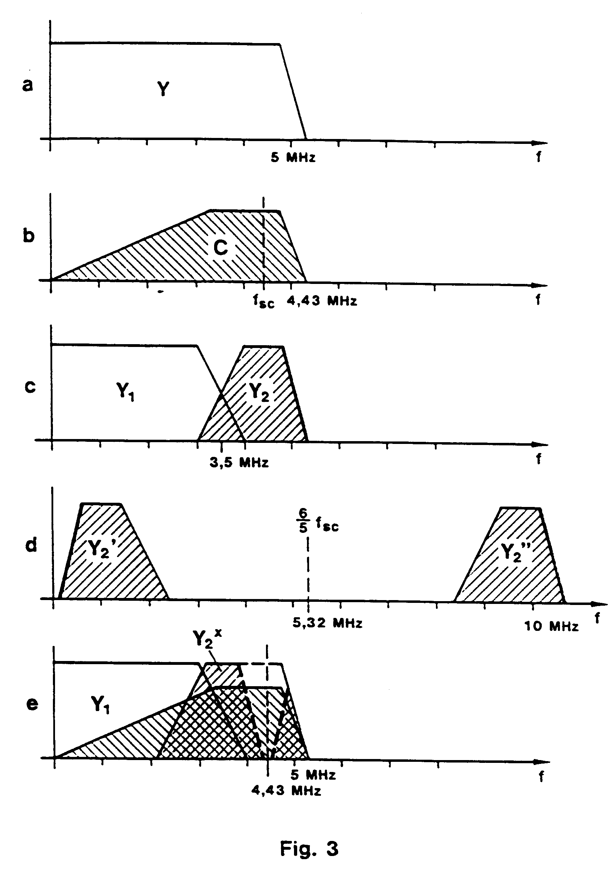

In Figur 2 ist prinzipiell dargestellt, wie das vorstehend erläuterte Erfindungsprinzip schaltungstechnisch auf der Sendeseite umgesetzt werden kann. Die Farbwertsignale Rot (R), Grün (G) und Blau (B) werden in einer Matrizierstufe 20 in die Farbdifferenzsignale R-Y und B-Y sowie in das Leuchtdichtesignal Y (Figur 3a) umgeformt. Die Farbdifferenzsignale R-Y, B-Y werden in Tiefpaßfiltern 21 und 22 mit einer Grenzfrequenz von jeweils 1,3 MHz tiefpaßgefiltert und anschließend in einem Quadraturmodulator 23 einem Farbträger F_{sc} von 4,43 MHz aufmoduliert. Das daraus resultierende, geträgerte Farbsignal C ist in Figur 3b dargestellt, wobei der Farbträger f_{sc} strichpunktiert eingezeichnet ist.

Aus dem Leuchtdichtesignal Y gemäß Fig. 3a wird mit Hilfe eines Tiefpaßfilters 241 mit einer Grenzfrequenz von 3,5 MHz der tieffrequente Anteil Y₁ abgefiltert und sowohl einer ersten Addierstufe 26 als auch einer Subtrahierstufe 243 zugeführt. Der zweite Eingang der Subtrahierstufe 243 wird mit dem in einer Laufzeitschaltung 242 um eine Laufzeit Δt verzögerten Leuchtdichtesignal Y beaufschlagt, sodaß am Ausgang der Subtrahierstufe 243 der hochfrequente Anteil Y₂ des Leuchtdichte-Signals Y zur Verfügung steht. Die Anteile Y₁ und Y₂ sind in Figur 3c spektral dargestellt.

Der hochfrequente Anteil Y2 wird mit Hilfe einer Mischstufe 244, welcher eine Mischerfrequenz von 6/5 f_{sc} zugeführt wird, in eine tiefe Frequenzlage umgesetzt, wie aus Figur 3d, Anteil Y'₂ ersichtlich ist. Der bei der Mischung spiegelbildlich zur Mischerfrequenz entstehende hochfrequente Anteil Y''₂ wird über das nachgeschaltete Tiefpaßfilter 245 mit einer Grenzfrequenz von 2 MHz unterdrückt.

Die angegebene Mischerfrequenz von 6/5 f_{sc} ist beispielhaft und stellt den geringstmöglichen Wert dar. Eine andere mögliche Mischerfrequenz wäre beispielsweise 7/8 f_{sc}.

Die hochfrequente, rechte Flanke des hochfrequenten Anteils Y₂ wird bei der Mischung infolge der dabei auftretenden Spiegelung des Anteils Y₂ zur niederfrequenten Flanke des Anteils Y'₂. Diese Flanke soll vorzugsweise durch geeignete Wahl der Mischerfrequenz möglichst nahe an die Frequenz 0 Hz herangerückt werden. Bei der anschließenden Modulation des Anteils Y'₂ in der Amplitudenmodulationsstufe 247 mit einem von Teilbild zu Teilbild um 180° in der Phase umgeschalteten Farbträger f_{sc} wird infolge der erneuten Spiegelung die tieffrequente Flanke des Anteils Y'₂ wieder zur hochfrequenten Flanke des interessierenden unteren Seitenbandes des resultierenden Modulationssignals Y*₂. Das in Figur 3e gestrichelt eingezeichnete obere Seitenband des resultierenden Modulationssignals Y*₂ wird mit Hilfe eines Tiefpaßfilters 25 mit einer Grenzfrequenz von 5 MHz nur zum Teil unterdrückt.

Zur Erzeugung des von Teilbild zu Teilbild um 180° in der Phase umgeschalteten Farbträgers f_{sc} werden einem Phasenschalter 246 die Trägerfrequenz f_{sc} sowie der Vertikalsynchronimpuls V zugeführt. Da ohne weitere Maßnahmen ein herkömmlicher PAL-Empfänger das Modulationssignal Y*₂ wegen dessen Modulation mit dem Farbträger f_{sc} als Farbsignal mit verfälschter Farbe detektieren würde, muß der der Modulationsstufe 247 zugeführte Farbträger außer der schon erwähnten teilbildsequentiellen Phasenumschaltung um 180° eine bestimmte Phasenlage erhalten. Und zwar wird alternativ in jeder Zeile die Phasenlage 90° (dies entspricht der Achse bzw. Phasenlage des Farbdifferenzsignals R-Y) oder 0°/-180° (dies entspricht der Achse bzw. Phasenlage des Farbdifferenzsignals B-Y) gewählt. Im Falle der letztgenannten Alternative wird der Farbträger f_{sc} von Zeile zu Zeile um 180° in der Phase geschaltet, wozu dem Phasenschalter 246 der Horizontalsynchronimpuls H zugeführt wird.

Durch die teilbildsequentielle Umschaltung der Phase des Farbträgers f_{sc} um 180° wird das Spektrum des Modulationssignals Y*₂ in das vorstehend erwähnte Fukinuki-Loch transponiert.

Das abgefilterte Modulationssignal Y*₂ wird in einer ersten Addierstufe 26 mit dem tieffrequenten Anteil Y₁ zusammengefügt und das daraus resultierende Leuchtdichte-Signal wird in einer zweiten Addierstufe 27 mit dem Farbsignal C zum resultierenden PAL-C (compatible) FBAS-Signal gemäß Figur 3e kombiniert. Dieses Signal kann dann einem üblichen terrestrischen Fernsehsender zur terrestrischen Übertragung zugeführt werden. Dieses terrestrisch ausgestrahlte Signal kann von einem herkömmlichen PAL-Empfänger verarbeitet werden, wobei nur der tieffrequente Anteil Y₁ des Leuchtdichte-Signalspektrums ausgewertet wird. Dies ist jedoch, wie eingangs bereits erläutert wurde, kein Nachteil, da bei der Standard-PAL-Übertragung im sendeseitigen Coder und empfangsseitigen Decoder Notch-Filter verwendet werden, welche das Leuchtdichte-Signal auf etwa 3,5 MHz begrenzen. Von Vorteil für den kompatiblen PAL-Empfang ist jedoch, daß ein Übersprechen von Leuchtdichte-Spektren in Farbspektren und umgekehrt weitgehend vermieden wird, weil die höherfrequenten Anteile des Leuchtdichte-Signals nicht nach dem PAL-Standard übertragen werden.

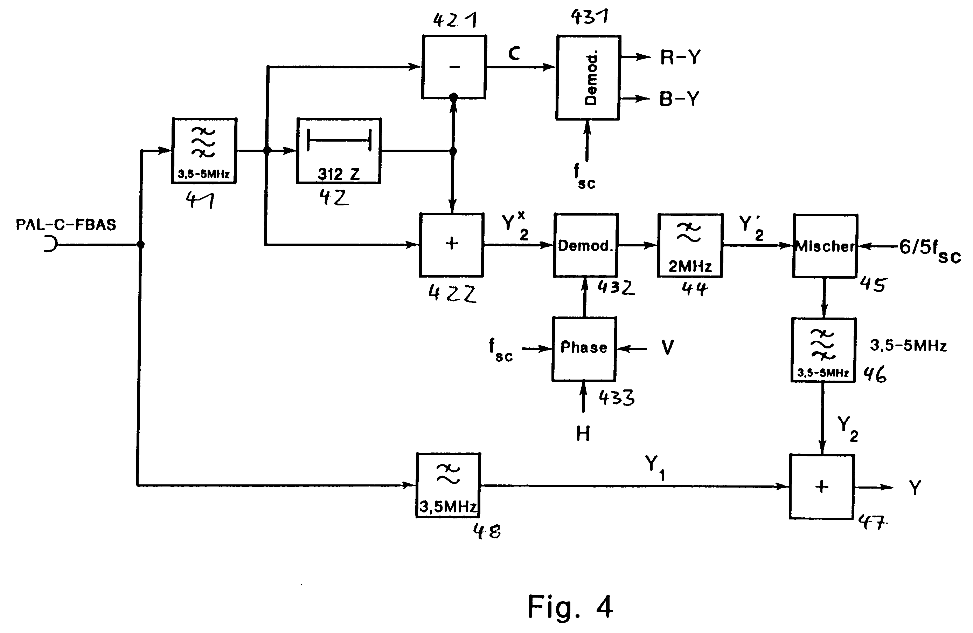

Ein Empfänger, welcher auch den geträgert übertragenen hochfrequenten Anteil des Leuchtdichte-Signalspektrums, d.h., das Modulationssignal Y*₂ auswertet und dadurch eine höhere Auflösung der Leuchtdichte bietet, ist in dem Blockschaltbild nach Figur 4 erläutert.
Aus dem ankommenden PAL-C-FBAS-Signal wird über ein Tiefpaßfilter 48 mit einer Grenzfrequenz von 3,5 MHz der tieffrequente Anteil Y₁ ausgesiebt und einem ersten Eingang einer ersten Addierstufe 47 zugeführt, welche in noch näher zu beschreibender Weise den hochfrequenten Anteil Y₂ an ihrem zweiten Eingang erhält und dem tieffrequenten Anteil Y₁ zur Bildung des ursprünglichen Leuchtdichtesignals Y hinzuaddiert.

Zur Gewinnung des hochfrequenten Anteils Y₂ sowie der Farbdifferenzsignale R-Y und B-Y wird das ankommende PAL-C-FBAS-Signalferner einem Bandpaßfilter 41 mit einer unteren Grenzfrequenz von 3,5 MHz und einer oberen Grenzfrequenz von 5 MHz zugeführt. Ein nachgeschaltetes Teilbildkammfilter, enthaltend eine 312-Zeilen-Verzögerung 42, eine Subtrahierstufe 421 und eine zweite Addierstufe 422, liefert am Ausgang der Subtrahierstufe 421 das Farbsignal C und am Ausgang der zweiten Addierstufe 422 das Modulationssignal Y*₂.

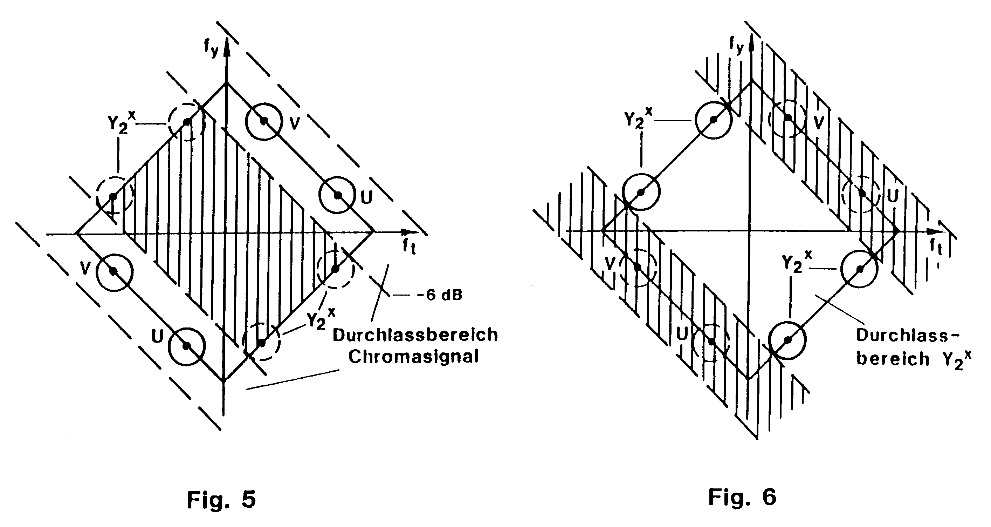

Die zugehörigen Filtercharakteristiken sind in den Figuren 5 und 6 veranschaulicht, welche die Filterung im vertikal-temporalen Bereich (Achsen f_{y} und fₜ) bezüglich des Farbsignals C und des Modulationssignals Y*₂ zeigen. Die in den Figuren 5 und 6 schraffiert eingezeichneten Bereiche sind die Sperrbereiche, während die übrigen, nicht-schraffierten Bereiche die Durchlaßbereiche darstellen. Wie aus Vergleich von Figur 5 und 6 ersichtlich ist, sind bei den dort dargestellten Filtercharakteristiken die Sperr- und Durchlaßbereiche exakt komplementär ausgebildet.

Zur Wirkungsweise der vertikal-temporalen Filterung:
Bei der angenommenen Phasenlage für die Komponenten C und Y*₂ bei der PAL-Norm ergibt sich nach jeweils 312 Zeilen eine Phasenumkehr der Farbvektoren und eine Phasengleichheit der Leuchtdichtevektoren. Bei der Addition (zweite Addierstufe 422) bzw. Subtraktion (Subtrahierstufe 421) der unverzögerten und der um 312 Zeilen verzögerten Komponenten heben sich die Farbkomponente C bzw. die Leuchtdichtekomponente Y*₂ auf. Dieser wechselseitigen Aufhebung entsprechen die Darstellungen in den Figuren 5 und 6.

Aus der vertikal-temporal gefilterten Farbkomponente C werden durch Demodulation in einer ersten Demodulationstufe 431, welcher der Farbträger f_{sc} zugeführt wird, die Farbdifferenzsignale R-Y und B-Y in üblicher Weise gewonnen.

Der Leuchtdichte-Anteil am Ausgang der zweiten Addierstufe 422 stellt das geträgerte hochfrequente Leuchtdichtesignal Y*₂ dar, das in einer zweiten Demodulationsstufe 432 demoduliert wird. Hierzu wird der zweiten Demodulationsstufe 432 in gleicher Weise wie der sendeseitigen Modulationsstufe 247 von einem Phasenschalter 433 ein teilbildsequentiell um -180° in der Phase alternierender Farbträger f_{sc} zugeführt, welcher entsprechend der gewählten Phasenlage des Farbträgers entweder nicht geschaltet oder von Zeile zu Zeile um 180° geschaltet wird. Dementsprechend werden dem Phasenschalter 433 der Farbträger f_{sc}, der Vertikalsynchronimpuls V und der Horizontalsynchronimpuls H zugeführt. Das demodulierte Signal am Ausgang der Demodulationsstufe 432 wird zur Absiebung unerwünschter Demodulationsprodukte in einem Tiefpaßfilter 44 mit einer Grenzfrequenz von 2 MHz gefiltert, worauf der resultierende, in seiner Frequenzlage versetzte, hochfrequente Leuchtdichteanteil Y'₂ einer Mischstufe 45 zugeführt wird, die diesen Anteil in die ursprüngliche, in Figur 3c dargestellte Frequenzlage rücktransponiert. Hierzu wird dem Mischer eine Mischfrequenz von 6/5 f_{sc} zuführt, wie dies entsprechend bei der sendeseitigen Mischstufe 244 der Fall war. Alternativ wird ebenso wie bei der sendeseitigen Mischstufe 244 der empfangsseitigen Mischstufe 45 eine Mischfrequenz von 7/8 f_{sc} zugeführt.
Der in seine richtige Frequenzlage rücktransponierte hochfrequente Anteil Y₂ wird über ein Bandpaßfilter 46 mit einer unteren Grenzfrequenz von 3,5 MHz und einer oberen Grenzfrequenz von 5 MHz gesiebt und dann der ersten Addierstufe 47 zugeführt.
Die genaue spektrale Lage des Modulationssignals Y*₂ in Fig. 5, 6 und 7 hängt ab von der Phasenlage des Farbträgers f_{sc} und der Mischfrequenz. Aus einer Anzahl von verschiedenen Möglichkeiten sind in Fig. 5 und 6 jeweils zwei dargestellt. So liegen z.B. bei einer Mischfrequenz von 7/8 f_{sc} und Modulation mit der Phasenlage +V im ersten Teilbild und -V im zweiten Teilbild die Spektren von Y*₂ bei 72 Perioden/Bildhöhe und - 20,3 Hz und bei -216 Perioden/Bildhöhe und 4,7 Hz. Bei einer Mischfrequenz von 6/5 f_{sc} und Modulation mit der Phasenlage +V im ersten Teilbild und -V im zweiten Teilbild liegen die Spektren bei 288 Perioden/Bildhöhe und - 20,3 Hz und bei 0 Perioden/Bildhöhe und 4,7 Hz.

Im zweiten Ausführungsbeispiel wird das Übersprechen von der Leuchtdichte in die Farbe noch weiter reduziert.
Dazu wird in jeder Zeile die Phasenlage entsprechend der Achse des Farbdifferenzsignals B-Y gewählt. Die Phase des dem Phasenschalters 246 zugeführten Farbträgers f_{sc} wird so gestellt, daß sie in jeder Zeile der normgemäßen Phase des B-Y-Vektors entspricht. Der Horizontalsynchronimpuls H braucht nicht mehr zugeführt werden.
Durch die teilbildsequentielle Umschaltung der Phase des Farbträgers f_{sc} um 180° wird das Spektrum des Modulationssignals Y*₂ wie im ersten Ausführungsbeispiel in das erwähnte Fukinuki-Loch transponiert. Durch einen größeren Abstand von den Spektren der U- und V-Komponenten wird jedoch vorteilhaft das Übersprechen von Leuchtdichte und Farbe weiter reduziert.

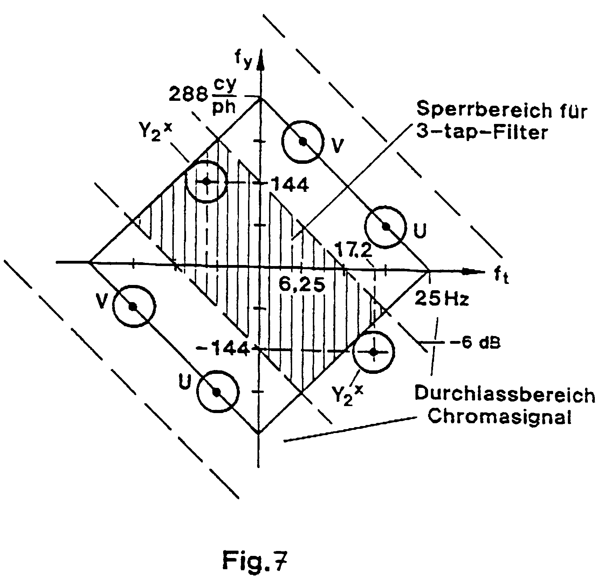

Der zugehörige f_{y}- fₜ-Spektralraum ist in Fig. 7 dargestellt. Der schraffiert eingezeichnete Bereich ist der Sperrbereich für das Chromasignal C. Das Modulationssignal Y*₂ und die U- und V-Komponenten werden durch ein digitales Filter mit drei oder mehr Koeffizienten separiert.

Im Empfänger für das zweite Ausführungsbeispiel wird dem Phasenschalter 433 ein dem des Senders entsprechender Farbträger zugeführt und der Horizontalsynchronimpuls H wird im Phasenschalter 433 nicht mehr benötigt.

Durch die Gleichphasigkeit des Farbträgers f_{sc} mit dem Farbdifferenzsignal B-Y für die Modulation/Demodulation des Signals Y*₂ ergeben sich die aus Fig. 7 ersichtlichen Lagen von Y*₂ bei ± 144 Perioden/Bildhöhe und bei den temporalen Frequenzen von + 17,2 Hz und bei - 7,8 Hz.

Um die Kompatibilität mit vorhandenen Empfängern weiter zu verbessern, ist es vorteilhaft, den Pegel des Modulationssignals Y*₂ im Sender abzusenken und im Empfänger entsprechend wieder anzuheben.

Das erfindungsgemäße Verfahren bietet folgende Vorteile:
- Sowohl der kompatible PAL-Empfang als auch der verbesserte PAL-Empfang sind weitgehend frei von Crosscolour-Störungen;
- auch der hochfrequente Anteil Y₂ des Leuchtdichte-Signals ist frei von Übersprechen aus dem ursprünglichen Leuchtdichte-Signal, da letzteres bei 3,5 MHz begrenzt wurde;
- der verbesserte PAL-Empfänger zeigt eine volle Auflösung des Leuchtdichte-Signals;
- die gerätetechnische Realisierung sowohl auf der Sendeals auch auf der Empfängerseite ist relativ einfach.

## Patentansprüche

1. Kompatibles Frequenzmultiplex-Fernsehsystem, bei dem sendeseitig das Leuchtdichte-Signalspektrum in einen tieffrequenten Anteil Y₁ und einen hochfrequenten Anteil Y₂ aufgespalten und derart einem Träger aufmoduliert wird, daß das Spektrum des resultierenden Modulationssignals Y*₂ im dreidimensionalen Farbfernsehsignal-Spektrum in einem von Nutzsignalspektren praktisch unbesetzten spektralen Raum innerhalb der vorgegebenen Kanalbandbreite zu liegen kommt, wobei das Modulationssignal Y*₂ zusammen mit dem tieffrequenten Anteil Y₁ des Leuchdichte-Signalspektrums als Leuchtdichte-Information Y im Farbfernsehsignal übertragen wird und bei dem empfangsseitig das Modulationssignal Y*₂ aus dem empfangenen Farbfernsehsignal ausgefiltert und demoduliert wird und das daraus resultierende, dem hochfrequenten Anteil Y₂ des Leuchtdichte-Signalspektrums entsprechende Signal dem aus dem empfangenen Farbfernsehsignal abgetrennten tieffrequenten Anteil Y₁ des Leuchtdichte-Signalspektrums hinzugefügt wird, **dadurch gekennzeichnet**, daß der tieffrequente Anteil Y₁ des Leuchtdichte-Signalspektrums bis zu der unterhalb der Bandgrenze des Fernsehsystems liegenden Auswertegrenze (3,5 MHz beim PAL-System) von herkömmlichen Farbfernsehempfängern reicht und daß der hochfrequente Anteil Y₂ des Leuchtdichte-Signalspektrums von der Auswertegrenze bis zur Bandgrenze des Fernsehsystems (z. B. 5 MHz beim PAL-System) reicht.

2. Fernsehsystem nach Anspruch 1, **dadurch gekennzeichnet**, daß vor der sendeseitigen Modulation des hochfrequenten Anteils Y₂ des Leuchtdichte-Signalspektrums eine Umsetzung in eine tieffrequente Lage erfolgt und daß empfangsseitig nach der Demodulation des Modulationssignals Y*₂ eine Umsetzung des daraus resultierenden Signals in die ursprüngliche Frequenzlage erfolgt.

3. Fernsehsystem nach Anspruch 1 oder 2, **dadurch gekennzeichnet**, daß empfangsseitig das Modulationssignal Y*₂ durch vertikal-temporale Filterung aus dem empfangenen Farbfernsehsignal ausgefiltert wird.

4. Fernsehsystem nach Anspruch 3, **dadurch gekennzeichnet**, daß das Farbfernsehsignal vor der vertikal-temporalen Filterung hochpaß- oder bandpaßgefiltert wird.

5. Fernsehsystem nach einem oder mehreren der vorhergehenden Ansprüche, **dadurch gekennzeichnet**, daß die Phasenlage des Modulationssignals Y*₂ entweder
- stets der Phasenlage des Farbdifferenzsignals R-Y oder
- zeilenalternativ der positiven bzw. um 180° gedrehten Phasenlage des Farbdifferenzsignals B-Y oder
- stets der Phasenlage des Farbdifferenzsignals B-Y entspricht.

6. Fernsehsystem nach einem oder mehreren der vorhergehenden Ansprüche, **dadurch gekennzeichnet**, daß der Pegel des Modulationssignals Y*₂ im Sender abgesenkt und im Empfänger entsprechend angehoben wird.

7. Fernsehsystem nach einem oder mehreren der Ansprüche 1 bis 4 und 6, **dadurch gekennzeichnet**, daß der hochfrequente Anteil Y'₂ mit einem zusätzlichen Träger mit einer Frequenz, die den (2 * n + 1) / 2 -fachen Wert der Zeilenfrequenz hat, moduliert bzw. demoduliert wird.

8. Fernsehsystem nach Anspruch 7, **dadurch gekennzeichnet**, daß die Zahl n den Wert 256 hat.

## Claims

1. Compatible frequency multiplex television system, in which on the transmitting side the luminance signal spectrum is separated into a low frequency portion Y₁ and a high frequency portion Y₂ and modulated onto a carrier such that the spectrum of the resulting modulation signal Y*₂ in the three dimensional colour television signal spectrum comes to be located in a spectral space which is practically unoccupied by useful signals within the pre-set channel band width, wherein the modulation signal Y*₂ together with the low frequency portion Y₁ of the luminance signal spectrum is transmitted as luminance information Y in the television signal and the modulation signal Y*₂ is filtered out of the received television signal on the receiving side and demodulated, and the signal corresponding to the high frequency portion Y₂ of the luminance signal spectrum resulting therefrom is added to the low frequency portion Y₁ of the luminance signal spectrum separated from the received television signal, characterised in that the low frequency portion Y₁ of the luminance signal spectrum extends to the evaluation limit (3.5 MHz in the PAL system) of conventional colour television receivers lying below the television system band limit and that the high frequency portion Y₂ of the luminance signal spectrum extends from the evaluation limit to the television system band limit (for example, 5 MHz in the PAL system).

2. Television system according to claim 1, characterised in that before the modulation on the transmission side of the high frequency portion Y₂ of the luminance signal spectrum, conversion into a low frequency position occurs and that on the receiving side, after demodulation of the modulation signal Y*₂, conversion of the signal resulting therefrom into the original frequency position occurs.

3. Television system according to claim 1 or 2, characterised in that on the receiving side, the modulation signal Y*₂ is filtered out of the received colour television signal by vertical temporal filtering.

4. Television system according to claim 3, characterised in that the colour television signal is high pass filtered or band pass filtered before the vertical temporal filtering.

5. Television system according to one or more of the preceding claims, characterised in that the phase position of the modulation signal Y*₂ is either
- always the phase position of the colour difference signal R-Y, or
- for alternating lines the positive or 180° rotated phase position of the colour difference signal B-Y or
- always corresponds to the phase position of the colour difference signal B-Y

6. Television system according to one or more of the previous claims, characterised in that the level of the modulation signal Y*₂ is reduced in the transmitter and is correspondingly increased in the receiver.

7. Television system according to one or more of claims 1 to 4 and 6, characterised in that the high frequency portion Y'₂ is modulated or demodulated with an additional carrier with a frequency which has a value (2 * n + 1)/2 times that of the line frequency.

8. Television system according to claim 7, characterised in that the number n has the value 256.

## Revendications

1. Système de télévision compatible a multiplexage en fréquence dans lequel, côté émission, le spectre du signal de luminance est divisé en une fraction basse fréquence Y₁ et une fraction haute fréquence Y₂ et est modulé sur une porteuse de telle manière que le spectre du signal de modulation résultant Y*₂ dans le spectre du signal télévision tridimensionnel vient s'arrêter dans un espace spectral pratiquement inoccupé par des spectres de signal utile a l'intérieur de la largeur de bande de canal prédéterminée, le signal de modulation Y*₂ étant transmis avec la fraction basse fréquence Y₁ du spectre du signal de luminance comme information de luminance Y dans le signal de télévision couleur et dans lequel, côté réception, le signal de modulation Y*₂ est filtré du signal de télévision reçu et démodulé et le signal qui en résulte, qui correspond a la fraction haute fréquence Y₂ du spectre du signal de luminance est ajouté a la fraction basse fréquence Y₁ du spectre du signal de luminance séparé du signal de télévision couleur reçu, **caractérisé en ce** que la fraction basse fréquence Y₁ du spectre du signal de luminance va jusqu'à la limite d'évaluation (3,5 MHz pour le système PAL) des récepteurs de télévision couleur traditionnels qui se situe au-dessous de la limite de fréquence du système de télévision et que la fraction haute fréquence Y₂ du spectre du signal de luminance va de la limite d'évaluation a la limite de fréquence du système de télévision (par exemple 5 MHz pour le système PAL).

2. Système de télévision selon la revendication 1, **caractérisé en ce** qu'une transformation en une position basse fréquence est effectuée avant la modulation côté émission de la fraction haute fréquence Y₂ du spectre du signal de luminance et que, côté réception après la démodulation du signal de modulation Y*₂, une transformation du signal qui en résulte dans la position en fréquence est effectuée.

3. Système de télévision selon la revendication 1 ou 2, **caractérisé en ce** que, côté réception, le signal de modulation Y*₂ est filtré du signal de télévision couleur reçu par filtrage vertical-temporel.

4. Système de télévision selon la revendication 3, **caractérisé en ce** que le signal de télévision couleur est filtré par passe-haut ou par passe-bas avant le filtrage vertical-temporel.

5. Système de télévision selon l'une ou plusieurs des revendications précédentes, **caractérisé en ce** que la relation des phases du signal de modulation Y*₂ correspond
- soit à la relation des phases du signal de différence de couleur R-Y,
- soit en alternance de lignes de la relation des phases positive ou tournée de 180° du signal de différence de couleur B-Y,
- soit à la relation des phases du signal de différence de couleur B-Y.

6. Système de télévision selon l'une ou plusieurs des revendications précédentes, **caractérisé en ce** que le niveau du signal de modulation Y*₂ est abaissé dans l'émetteur et est élevé en conséquence dans le récepteur.

7. Système de télévision selon l'une ou plusieurs des revendications 1 à 4 et 6, **caractérisé en ce** que la fraction haute fréquence Y'₂ est modulée ou démodulée avec une porteuse supplémentaire avec une fréquence qui a la (2 * n + 1) / 2 -ième valeur de la fréquence ligne.

8. Système de télévision selon la revendication 7, **caractérisé en ce** que la nombre n a la valeur 256.
